# EUROPEAN PATENT APPLICATION

(11) **EP 1 967 753 A2**
(43) Date of publication of application: **10.09.2008**
(21) Application number: 08004106.4
(22) Date of filing: 05.03.2008
(51) Int. Cl.: F16D 41/00

(54) **Engine startup torque transmitting device**

(30) Priority: 08.03.2007 JP 2007058689
(71) Applicant: Denso Corporation, Kariya-city, Aichi-pref. 448-8661 (JP)
(72) Inventor: Haruno, Kiyokazu, Kariya-city Aichi-pref., 448-8661 (JP); Wakahara, Yasuyuki, Kariya-city Aichi-pref., 448-8661 (JP); Masaki, Kazuo, Kariya-city Aichi-pref., 448-8661 (JP)
(74) Representative: Kuhnen & Wacker

(57) **Abstract**

An engine startup torque transmitting device (1) for transmitting a drive torque, generated by a starter, to an engine crankshaft (2) to start up an engine, is disclosed having a clutch (6), disposed between a first rotary body (3), mounted on the crankshaft, and a second rotary body (5) rotatably supported on the first rotary body, through which a torque transfer is established from the second rotary body to the first rotary body. The clutch (6) is internally filled with lubricating grease including base oil containing squalene. Squalene has kinetic viscosity with less temperature dependency and high traction force. The use of grease containing squalene provides a compromise between clutch-engaging capability and wear resistance. This enables reduction in wear of an inner member without sacrificing clutch-engaging capability, resulting in an elongated operating life with no increase in physical size of the clutch.

## Description

### BACKGROUND OF THE INVENTION

### 1. Technical Field of the Invention

The present invention relates to an engine startup torque transmitting device for transmitting drive torque of a starter to an engine crankshaft to start up an engine.

### 2. Description of the Related Art

In recent years, for imposing exhaust emission controls of automotive vehicles regarded to be a potential source of global warming, for instance, idling stop systems have heretofore been put into practical use for automatically stopping an engine during a stop at a stoplight in an intersection.

Japanese Patent Application publication 2006-312891 (Patent Publication 1), Japanese Patent Publication No. 7-35824 (Patent Publication 2), Japanese Patent Application publication 5-230486 (Patent Publication 3) and Japanese Patent Application publication 6-279777 (Patent Publication 4) disclose such idling stop systems to which technologies of the related arts are applied.

Each of such idling stop systems includes a clutch incorporating a ring gear. The ring gear is rotatably supported on a flywheel via a bearing, which is mounted on a crankshaft of the engine, and permanently engaged with a pinion gear of a starter.

The clutch, incorporated in the ring gear, is structured in a one-way clutch operative such that during an operation of the starter to transmit drive torque through the pinion gear to the ring gear for rotation, i.e., during a startup of the engine, the clutch permits drive torque to be transmitted through the ring gear to the flywheel whereas during the startup of the engine to drive the flywheel for rotation, i.e., when a rotation speed of the flywheel increases beyond a rotation speed of the ring gear, the clutch interrupts a torque transfer from the flywheel to the ring gear. With such a structure, the clutch is filled with a lubricating agent.

The lubricating agent, used in the clutch, needs to have characteristics such as: (1) a high frictional coefficient; and (2) a kinetic viscosity with a less temperature dependency. To this end, silicone grease is mainly used as the lubricating agent and composed of silicone oil as base oil (see Patent Publications 2 to 4).

Under the present set of circumstances, endurance cycles of a commercially available clutch using silicone grease are regarded to reach the extent of about 30 to 50 thousand cycles. However, with a vehicle installed with the idling stop system mentioned above, the operation frequency of the clutch greatly increases. As a result, wear occurs on a clutch engaging surface (especially on an inner member) within a short period of time (in several years), causing reduction to occur in the operating life of the clutch. Thus, the clutch needs to be formed in a greatly increased physical size in order to have an increased operating life.

### SUMMARY OF THE INVENTION

The present invention has been completed with a view to addressing the above issues and has an object to provide an engine startup torque transmitting device that adopts grease suitable for a clutch to minimize the occurrence of a wear of the clutch without sacrificing a clutch-engaging capability.

To achieve the above object, one aspect of the present invention provides an engine startup torque transmitting device for transmitting a drive torque, generated by a starter, to an engine crankshaft to start up an engine. The engine startup torque transmitting device comprises a first rotary body mounted on the crankshaft, a second rotary body rotatably supported on the first rotary body via a bearing and drivably connected to the starter at all times, and a clutch disposed between the first and second rotary bodies to be operative to permit a torque transfer from the second rotary body to the first rotary body during an operation of the starter to rotatably drive the second rotary body while interrupting the torque transfer from the first rotary body to the second rotary body during an operation of the engine to rotatably drive the first rotary body. The clutch is internally filled with lubricating grease including a base oil containing a squalene.

With the engine startup torque transmitting device, the base oil may preferably further contain polyalphaolefin (PAO).

With the engine startup torque transmitting device, the grease may preferably further include an additive, composed of a vapor phase corrosion inhibitor, which is blended with the base oil.

With the engine startup torque transmitting device, the clutch may preferably have both sides provided with sealing means for preventing the grease, filled in the clutch, from leaking, and the bearing includes a rolling bearing having a sealing function and disposed on one side of the clutch as the sealing means.

With the engine startup torque transmitting device, the bearing may preferably have one side closer to the clutch to have the sealing function in a non-contact seal.

With the engine startup torque transmitting device, the squalene may be preferably contained in the base oil of the grease in an amount of 10 % by mass or more based on a whole of the base oil including the squalene.

With the engine startup torque transmitting device, the base oil used in the grease may preferably have a friction coefficient of 0.14 or more at -40°C.

With the engine startup torque transmitting device, the grease may preferably further include silica or urea compound blended in the base oil as a puffing agent.

With the engine startup torque transmitting device, the grease may preferably have a traction coefficient of 0.035 or more at 25°C.

With the engine startup torque transmitting device, the second rotary body may preferably include a ring gear held in meshing engagement with a pinion gear of the starter.

With the engine startup torque transmitting device, the second rotary body may preferably include a crank pulley driven with the starter by a belt.

With the engine startup torque transmitting device, the engine startup torque transmitting device may be preferably applied to an engine auto stop/restart system for automatically controlling a stop and restart of the engine.

### BRIEF DESCRIPTION OF THE DRAWINGS

FIG. 1 is a cross sectional view showing an engine startup torque transmitting device of an embodiment according to the present invention.
FIG. 2 is cross sectional view showing a starter and the engine startup torque transmitting device of the present embodiment shown in FIG. 1.

### DETAILED DESCRIPTION OF PREFERRED EMBODIMENTS

Now, an engine startup torque transmitting device of an embodiment according to the present invention will be described below in detail with reference to the accompanying drawings. However, the present invention is construed not to be limited to such an embodiment described below and technical concepts of the present invention may be implemented in combination with other known technologies or the other technology having functions equivalent to such known technologies.

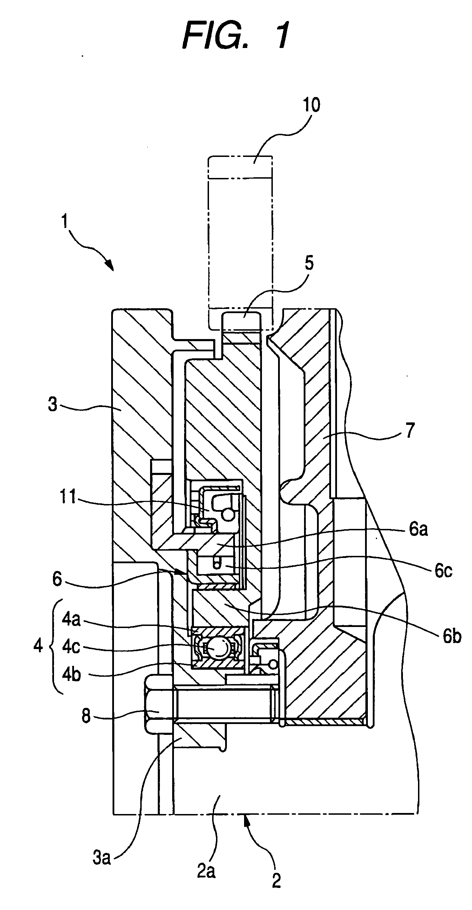

FIG. 1 is a cross-sectional view showing an engine startup torque transmitting device 1 of one embodiment according to the present invention.

With the present embodiment, the engine startup torque transmitting device 1 includes a first rotary body 3 fixedly connected to an engine crankshaft 2, a second rotary body 5 supported on the first rotary body 3 via a bearing 4 to be freely rotatable, and a clutch 6 mounted between the first and second rotary bodies 3 and 5.

The engine startup torque transmitting device 1 is applied to an engine autostart/restart system for stopping and restarting an engine. During a stop of a vehicle on, for instance, a red light at an intersection or during a stop of the vehicle by traffic jams, the engine startup torque transmitting device 1 serves as a system to automatically stop the engine and automatically restart the engine in response to a given takeoff operation (such as, for instance, a motion of a driver to release a brake pedal) and is referred to as an idling-stop system and economy running system, etc.

The first rotary body 3 includes, for instance, a flywheel of an MT (Manual Transmission) vehicle or a drive plate of an AT (Automatic Transmission) vehicle and has a boss portion 3a fixedly mounted on an end portion 2a of the crankshaft 2 by bolts 8 in a position remote from a sidewall 7 of an engine block.

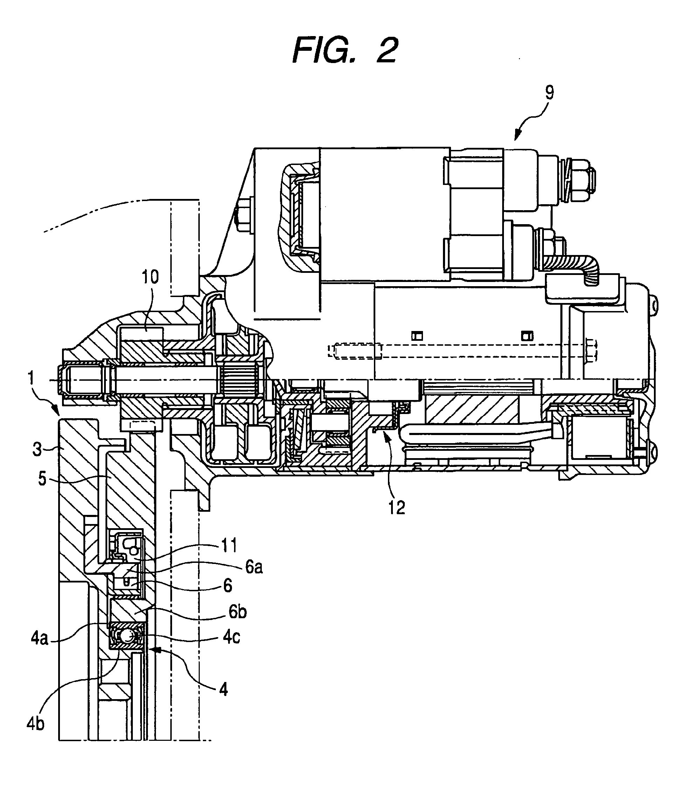

The second rotary body 5 takes the form of, for instance, an annular ring gear, which is permanently engaged with a pinion gear 10 of a starter 9 as shown in FIG. 2. Also, the starter 9 has a structure and operation, which are well known in the art, and, therefore, a detailed description of the same is herein omitted.

The bearing 4 is of a ball bearing, having an outer race 4a and an inner race 4b between which a plurality of balls 4c are rotatably disposed. The bearing 4 has a left side (closer to the clutch 6) provided with a non-contact seal and a right side (opposite to the clutch 6) provided with a contact seal. The bearing 4 has a function to serve as sealing means, which cooperates with an oil seal 11, disposed in the clutch 6 on a side remote from the bearing 4, to prevent grease, filled in the clutch 6, from leaking to the outside.

The clutch 6 includes an outer member 6a mounted on the first rotary body 3, an inner member 6b formed on the second rotary body 5, and a plurality of engaging elements 6c (such as, for instance, sprags, cams, rollers or the like). The clutch 6 is structured to operate as a one-way clutch such that when the starter 9 is driven to drivably rotate the second rotary body 5, i.e., during the startup of the engine, the clutch 6 permits drive torque from the starter 9 to be transmitted to the first rotary body 3 through the second rotary body 5 for causing the first rotary body 3 to crank the engine whereas when the engine has started up to drivably rotate the first rotary body 3, i.e., when a rotation speed of the first rotary body 3 exceeds the rotation speed of the second rotary body 5, the clutch 6 interrupts torque transfer from the first rotary body 3 to the second rotary body 5. The clutch 6 is internally filled with grease according to the present invention as will be described below in detail.

Now, the operation of the engine startup torque transmitting device 1 is described below in detail.

### a) During Startup of Engine

As drive torque of the starter 9 is transmitted to the second rotary body 5 via the pinion gear 10, the clutch 6 is brought into coupling engagement (with the outer member 6a and the inner member 6b being coupled to each other by means of the engaging elements 6c). This causes torque to be transmitted in a path "second rotary body 5→first rotary body 3→crankshaft 2", thereby cranking the engine.

During the cranking operation, further, the clutch 6 is repeatedly brought into the coupling state and idling state (with the outer member 6a and the inner member 6b being brought into an uncoupled state) depending on a fluctuation in rotation of the engine.

### b) After Engine Startup

As the engine begins complete combustion upon the cranking operation, the crankshaft 2 rotates the first rotary body 3 and increases in rotation speed. As the rotation speed of the first rotary body 3 exceeds the rotation speed of the second rotary body 5, the clutch 6 is brought into the idling condition. This interrupts the torque transfer from the first rotary body 3 to the second rotary body 5 and no rotation of the crankshaft 2 is transmitted to the second rotary body 5.

Thereafter, as the engine rotation speed increases to a given rotation speed, the clutch 6 is subjected to a centrifugal separation, thereby causing the outer member 6b and the inner member 6a of the clutch 6 to be completely separated. However, under a condition below the given rotation speed, the engaging elements 6c slide on the inner member 6b of the clutch 6 and, thus, the clutch 6 needs to have a wear life equivalent to the lifetime of the vehicle.

Next, grease filled in the clutch 6 will be described below in detail.

It is an essential condition for grease of the clutch 6 to have characteristics having a high friction coefficient and excellence in improving wear resistance. Especially, for application to the vehicle, grease needs to adapt to a wide range of temperature regions from a low temperature (-40°C) to a high temperature (ranging from 120 to 130°C). In addition, a frictional coefficient of grease acting as a lubricant between neighboring metal members takes various statuses, depending on a thickness of the lubricant, which are classified into a boundary lubrication condition (with the metal members kept in direct contact with each other), an elastohydrodynamic lubrication condition and a hydrodynamic lubrication condition. It is preferable for the clutch 6 to take the boundary lubrication condition when transmitting torque while taking the elastohydrodynamic lubrication condition or the hydrodynamic lubrication condition for escaping torque.

In order to have the desired lubrication condition as set forth above, grease, employed in the present invention, has torque-transmitting properties at a low temperature, comparable to the properties of silicone grease, and an excellent characteristic in improving wear resistance. For such characteristics to be obtained, it is essential for a base oil (lubricating oil) of grease to contain squalene. Squalene is fat and oil that belongs to a terpenoid family and mainly extracted from shark liver oil. Squalene has a viscosity index as high as 211 and a kinetic viscosity with less temperature dependence. In addition, squalene has a feature with an increased traction force.

Although the base oil, used in grease of the present invention, may be simply composed of squalene, squalene and other base oil may be mixed in combination for use as grease of the present invention. The base oil, available to be mixed with squalene, is not limited to a particular compound provided that such a compound can be used as grease. Concrete examples of the base oil may include at least one of groups including mineral oil and synthetic fluid.

Examples of synthetic fluid include synthetic fluid of the ester family represented by polyolester, synthetic hydrocarbon oil represented by polyalphaolefin (PAO) and polybudene, synthetic oil of ester family represented by alkyldiphenil ether and polypropylene glycol, silicone oil, fluorinated oil or the like.

The amount of squalene to be contained in the base oil is 10 to 100 % by mass, preferably 20 to 100 % by mass and more preferably 50 to 100 % by mass based on 100 % by mass of the base oil containing squalene.

Further, a puffing agent to be added to the base oil is not particularly limited. More particularly, examples of the puffing agent include a puffing agent of soap family represented by lithium soap and composite lithium soap, a puffing agent of urea-family represented by diurea, an inorganic puffing agent represented by organic clay and silica, an organic puffing agent represented by polytetrafluoroethylene and melamine cyanurate, etc. At least one of these compounds may be employed. More preferably, these compounds may include silica and urea compound. Urea compound may preferably include a diurea puffing agent and more preferably include a compound expressed in a general formula (1).

R¹-NHCONH-R²-NHCONH-R³ (1)

Further, in the formulae (1) described above, R¹ and R³ represent monovalent hydrocarbons with 4-20 carbons that are identical to each other or different from each other and include, for instance, aliphatic hydrocarbon groups, alicyclic hydrocarbon groups and aromatic hydrocarbon group. In addition, R² represents di-valent aromatic hydrocarbons with 6-15 carbons and is expressed by general formulae (2) to (4) described below.

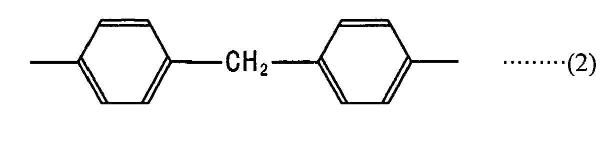

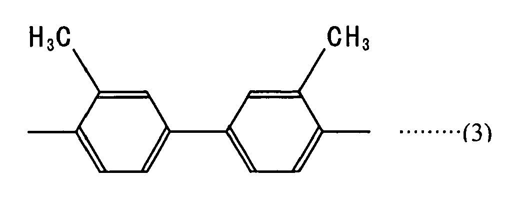

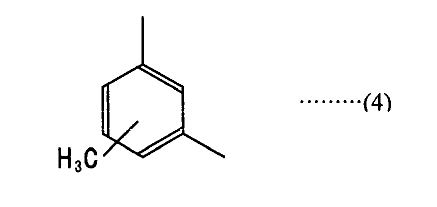

The puffing agent of diurea family can be obtained upon, for instance, reacting given diisocyanate and given monoamine with each other in the base oil. Preferable concrete examples of diisocianate include diphenylmethane-4,4'-diisocyanate.

Examples of monoamine include aliphatic amines, aromatic amines, cyclic amines or mixtures of these compounds.

Concrete examples of aliphatic amines may include octylamine, dodecylamine, hexadecylamine, octadecylamine and oleyl amine.

Concrete examples of aromatic amines may include aniline and p-toluidine.

Concrete examples of alicyclic amines may include cyclohexylamine.

Among monoamines set forth above, cyclohexylamine, octylamine, dodecylamine, hexadecylamine, octadecylamine or mixtures of these compounds may be preferably used to provide the diurea puffing agent.

The content of puffing agent may be appropriately determined so as to match a targeted viscosity and, in general, amount to a value of 1.0 to 30 % by mass and preferably 2.0 to 20.0 % by mass and more preferably 2.5 to 10.0 % by mass.

Other additives, available to be added to grease, may include those, usually used in grease, which include antioxidant, vapor phase corrosion inhibitor, metal deactivator, detergent additive, extreme-pressure additive, antiforming agent, antiemulsifying agent and oiliness agent, etc. These additives may be singly used or more than two kinds of these additives may be used in mixtures. Also, these additives may be added to grease depending on needs in an amount of generally 0.01 to 10.0 % by mass. However, the present invention is not particularly limited to such an adding amount provided that no object of the present invention is sacrificed.

Grease has a worked penetration of preferably 200 to 550, more preferably 230 to 520 and most preferably 280 to 500.

Hereunder, the present invention will be described more in detail with reference to Examples. However, the present invention is construed not to be limited to such Examples described below and technical scope of the present invention may be involved in various modification or alternatives implemented without departing from aims of the present invention.

### [Example 1]

### 1. Evaluation Test

### 1.1) Measurement on Frictional Coefficient with Barbell Plate Test

As used herein, the term "barbell plate test" refers to an experimental test in which a specimen, formed in a barbell shape, is brought into contact with a plate surface under which the plate is caused to rotate under a load to allow a surface of the specimen and the plate surface to slide on each other.

The specimen is made of Fe-Cr alloy steel formed in a structure including two discs, each having a dimension with a diameter of Φ13mm and thickness of 5mm, and a shaft having both ends connected to central areas of the two discs. Among these, peripheral portions of the discs are caused to slide on the plate surface.

### (1) Material of Test Piece

Barbell type test piece: SCr415
Plate type specimen: SUJ2

### (2) Test Method

With a test conducted in a cylinder line contact mode, a stabilized contact state can be obtained with a lessened biased contact even under a relatively low surface contact condition. Torque oriented in a sliding direction was measured using a load cell, thereby measuring the friction coefficient.

### (3) Test Condition:

A test condition is indicated below in Table 1.

**[Table 1]**

| Item | Condition |
|---|---|
| Load(N) | 800 |
| Surface Pressure (Mpa) | 1550 |
| Sliding Speed (m/s) | 0.388 |
| Test Time (s) | 15 |
| Test Temp. (°C) | -40 |

### 1. 2) Traction Coefficient of Grease on Ball/Disc EHL (Elastohydrodynamic Lubrication) Test Unit

An iron steel disc was rotated at a rotation speed Ud with a ball remaining under a free state at the rotation speed Ub. The rotational axis of the ball was deviated from the center of the disc. Upon the occurrence of a sliding motion of Us (at a sliding speed relative to a rotation of the ball), the traction of the ball, oriented in an axial direction thereof, was detected with a load cell and a ratio of the maximum value to the load was assigned to be the maximum traction coefficient.

### (1) Test Condition

Maximum Hertz Pressure: 0.711 Gpa
Speed: 0.5m/s
Temperature: 25°C

### 1. 3) Clutch Slipping Test

A specified amount of grease was sealed in the clutch of the present invention, after which the clutch was caused to rotate under a specified condition (at -40°C) to check whether or not the clutch could be coupled.

### 2. Production of Grease

Basic oil is mixed with given amounts of diisocyanate and amine or amine mixture to provide a blend. The blend was then heated under a given condition and subsequently cooled, after which the blend was cooled and treated with a rolling mill. The blend, to be mixed with the additive, was mixed with a given amount of additive, thereby producing grease.

### 3. Judgment on Advantageous Effect

(1) Barbell Plate Test (on Frictional Coefficient with -40°C)
   Acceptable (o): With a value of 0.14 or more
   Unacceptable (x): With a value less than 0.14
(2) Traction Coefficient (25°C)
   Acceptable (o): With a value ranging from 0.035 to 0.100
   Unacceptable (x):With a value out of an acceptable range
(3) Clutch Slipping Test (Test Result on Mounted State)
   Acceptable (o): With no occurrence of slippage
   Unacceptable (x): With occurrence of slippage
(4) Comprehensive Evaluation
   Acceptable (o): With all units under acceptable states
   Unacceptable (x): With one unit or more judged to be unacceptable
4. Test Result
   Blending prescriptions (base oil, puffing agent and antioxidant) of grease, percent compositions of base oil and chemical structures of the puffing agent are indicated in upper areas of Tables 2 to 6. Further, results on the barbell plate test, the traction coefficients of grease, the clutch slipping tests and the evaluation are indicated on lower areas of Tables 2 to 6.

### (Annotated:)

PAO (Poly-alpha Olefin): Kinetic Viscosity of 30mm²/s at 40°C
PET (Pentaerythritol Ester): Kinetic Viscosity of 30mm²/s at 40°C
ADE (Alkyldiphenyl Ether): Kinetic Viscosity of 100mm²/s at 40°C
Mineral Oil of P-family: Kinetic Viscosity of 100mm²/s at 40°C
Mineral Oil of N-family: Kinetic Viscosity of 100mm²/s at 40°C
Antioxidant: Phenol Antioxidant (3,5-di-t-butyl-4-hydroxyphenyl) propanoic acid propyl
Li-soap: 12-hydroxy stearic acid lithium soap

**[Table 2]**

| | Example 1 | Example 2 | Example 3 | Example 4 | Example 5 |
|---|---|---|---|---|---|
| Base Oil Composition (% by mass) | 90.0 | 90.0 | 90.0 | 90.0 | 95.0 |
| Ratio of Base Oil (% by mass) | Squalene 10 PAO 90 | Squalene 30 PAO 70 | Squalene 50 PAO 50 | Squalene 100 - | Squalene 100 - |
| Puffing Agent (% by mass) | Alicyclic Diurea 10.0 | Alicyclic Diurea 10.0 | Alicyclic Diurea 10.0 | Alicyclic Diurea 10.0 | Alicyclic Diurea 5.0 |
| R² of Urea-family | DM | DM | DM | DM | DM |
| Ratio R¹/R³ (% by mass) | Cyclohexyl 100 | Cyclohexyl 100 | Cyclohexyl 100 | Cyclohexyl 100 | Cyclohexyl 100 |
| Barbell Plate Test Frictional Coefficient with-40°C | 0.14 | 0.16 | 0.17 | 0.20 | 0.20 |
| Evaluation | ○ | ○ | ○ | ○ | ○ |
| Traction Coefficient (At 25°C) | 0.035 | 0.038 | 0.044 | 0.079 | 0.080 |
| Evaluation | ○ | ○ | ○ | ○ | ○ |
| Clutch Slipping Test | ○ | ○ | ○ | ○ | ○ |
| Comprehen. Evaluation | ○ | ○ | ○ | ○ | ○ |

**[Table 3]**

| | Example 6 | Example 7 | Example 8 | Example 9 | Example 10 |
|---|---|---|---|---|---|
| Base Oil Composition (% by mass) | 97.5 | 92.0 | 80.0 | 95.0 | 95.0 |
| Ratio of Base Oil (% by mass) | Squalene 100 - | Squalene 100 - | Squalene 100 - | Squalene 100 - | Squalene 100 - |
| Puffing Agent (% by mass) | Alicyclic Diurea 2.5 | Aliphatic Diurea 8.0 | Aromatic Diurea 20.0 | Alicyclic + Aliphatic Diurea 5.0 | Alicyclic + Aliphatic Diurea 5.0 |
| R² of Urea-family Ratio R¹/R³ (% by mass) | DM Cyclohexyl 100 | DM Octyl 100 | DM Paratoluil 100 | DM Cyclohexy 80 Octadecyl 20 | DM Cyclohexyl 50 Octyl 50 |
| Barbell Plate Test Frictional Coefficient with -40°C | 0.21 | 0.18 | 0.16 | 0.20 | 0.19 |
| Evaluation | ○ | ○ | ○ | ○ | ○ |
| Traction Coefficient (At 25°C) | 0.079 | 0.064 | 0.051 | 0.078 | 0.077 |
| Evaluation | ○ | ○ | ○ | ○ | ○ |
| Clutch Slipping Test | ○ | ○ | ○ | ○ | ○ |
| Comprehen. Evaluation | ○ | ○ | ○ | ○ | ○ |

**[Table 4]**

| | Example 11 | Example 12 | Example 13 | Example 14 | Example 15 |
|---|---|---|---|---|---|
| Base Oil Composition (% by mass) | 95.0 | 92.0 | 95.0 | 90.0 | 90.0 |
| Ratio of Base Oil (% by mass) | Squalene 100 - | Squalene 100 - | Squalene 100 - | Squalene 50 PET 50 | Squalene 20 Squalene 80 |
| Puffing Agent (% by mass) | Alicyclic + Aliphatic Diurea 5.0 | Alicyclic + Aliphatic Diurea 5.0 | Silica 5.0 | Alicyclic Diurea 10.0 | Alicyclic Diurea 10.0 |
| R² of Urea-family Ratio R¹/R³ (% by mass) | DM Cyclohexyl 100 | DM Octyl 100 | - | DM Cyclohexyl 100 | DM Cyclohexyl 100 |
| Antioxidant (% by mass) | - | 3.0 | - | - | - |
| Barbell Plate Test Frictional Coefficient with -40°C | 0.19 | 0.18 | 0.18 | 0.16 | 0.14 |
| Evaluation | ○ | ○ | ○ | ○ | ○ |
| Traction Coefficient (At 25°C) | 0.070 | 0.064 | 0.080 | 0.046 | 0.075 |
| Evaluation | ○ | ○ | ○ | ○ | ○ |
| Clutch Slipping Test | ○ | ○ | ○ | ○ | ○ |
| Comprehen. Evaluation | ○ | ○ | ○ | ○ | ○ |

**[Table 5]**

| | Example 16 | Compara. Example 1 | Compara. Example 2 | Compara. Example 3 | Compara. Example 4 |
|---|---|---|---|---|---|
| Base Oil Composition (% by mass) | 93.0 | 93.0 | 93.0 | 90.0 | 90.0 |
| Ratio of Base Oil | Squalene 100 | - | Squalane 100 | - | Squalane 100 |
| (% by mass) | - | PAO 100 | - | PAO 100 | - |
| Puffing Agent (% by mass) | Li Soap 7.0 | Li Soap 7.0 | Li Soap 7.0 | Alicyclic Diurea 10.0 | Alicyclic Diurea 10.0 |
| R² of Urea-family | - | - | - | DM | DM |
| Ratio R¹/R³ (% by mass) | - | - | - | Cyclohexyl 100 | Cyclohexyl 100 |
| Barbell Plate Test Frictional Coefficient with -40°C | 0.14 | 0.12 | 0.10 | 0.12 | 0.12 |
| Evaluation | ○ | × | × | × | × |
| Traction Coefficient (at 25°C) | 0.050 | 0.020 | 0.048 | 0.028 | 0.075 |
| Evaluation | ○ | × | o | × | ○ |
| Clutch Slipping Test | ○ | × | × | × | × |
| Comprehen. Evaluation | ○ | × | × | × | × |

**[Table 6]**

| | Comparative Example 5 | Comparative Example 6 | Comparative Example 7 | Comparative Example 8 |
|---|---|---|---|---|
| Base Oil Composition (% by mass) | 90.0 | 92.0 | 90.0 | 92.0 |
| Ratio of Base Oil (% by mass) | PET 100 | ADE 100 | Mineral Oil of P-family 100 | Mineral Oil of N-family 100 |
| Puffing Agent (% by mass) | Alicyclic Diurea 10.0 | Alicyclic Diurea 8.0 | Alicyclic Diurea 10.0 | Alicyclic Diurea 8.0 |
| R² of Urea-family | DM | DM | DM | DM |
| Ratio R¹/R³ (% by mass) | Cyclohexyl 100 | Cyclohexyl 100 | Cyclohexyl 100 | Cyclohexyl 100 |
| Barbell Plate Test Frictional Coefficient with -40°C | 0.10 | 0.08 | 0.08 | 0.07 |
| Evaluation | × | × | × | × |
| Traction Coefficient (At 25°C) | 0.040 | 0.056 | 0.058 | 0.085 |
| Evaluation | ○ | ○ | ○ | × |
| Clutch Slipping Test | × | × | × | × |
| Comprehen. Evaluation | × | × | × | × |

As set forth above, with the clutches of Examples 1 to 16, the grease, composed of the base oil and puffing agent with the base oil containing squalene, demonstrated a value ranging from 0.14 to 0.21 on the barbell plate test (at -40°C) and a traction coefficient ranging from 0.035 to 0.080 on the of grease with no slippage being present on the clutch slipping test. Thus, all clutches of Examples 1 to 16 were found to be acceptable on an effect evaluation.

Meanwhile, with the clutches of Comparative Examples 1 to 8 in which no squalene was contained in the base oil, the barbell plate test (at -40°C) demonstrated a value ranging from 0.07 to 0.12 on and the grease had a traction coefficient ranging from 0.020 to 0.085 with a slippages being present on the clutch-slipping tests. Thus, the greases of Comparative Examples 1 to 8 were found to be unacceptable and had no advantage over those of Examples 1 to 16.

Grease, containing 10 % by mass or more of squalene having the characteristics (with increased frictional coefficient and superior in improving wear resistance) based on a whole of the base oil, is used as a lubricant of the clutch 6. This enables the clutch 6 to have a compromise between clutch-engaging capability and wear resistance. That is, the clutch 6 can protect the inner member 6b from wearing without sacrificing clutch-engaging capability of the cutch 6, enabling the clutch 6 to have increased operating life with no increase in physical size of the clutch 6. Especially, with a vehicle on which an idling stop system is installed, the clutch 6 bears a remarkably high frequency of use and, hence, it is advantageous for the clutch 6 to use the grease containing squalene with resultant longer operating life of the clutch 6.

Further, silicone grease used in the clutch of the related art has a high frictional coefficient. Therefore, if the grease used in the bearing 4 is admixed with silicone grease, the bearing 4 encounters an increased amount of wear, possibly causing a shortened operating life of the bearing 4. On the contrary, the grease containing squalene is excellent in improving wear resistance. Therefore, even if the grease containing squalene is mixed to the grease used in the bearing 4, the grease containing squalene provides an advantage for the bearing 4, thereby minimizing an adverse affect on life of the bearing 4. Thus, no need arises for a seal member to be disposed in exclusive use between the clutch 6 and the bearing 4. This allows at least a contact seal to be provided on the bearing 4 in an area opposite to the clutch, enabling the prevention of leakage of the grease. In this case, the bearing 4 can have an area, closer to the clutch 6, which is kept in a non-contact seal, enabling a reduction in sliding torque with a contribution to improved fuel consumption.

### (Modified Form)

In an alternative, the grease of the present invention containing squalene can be applied not only to the clutch 6 of the engine startup torque transmitting device but also to the clutch 12 (see FIG. 2) incorporated in the starter 9.

While the present embodiment has been described above with reference to the ball bearing as one example of the bearing 4, it is to be appreciated that the present invention is not limited to such a ball bearing and may be applied to a rolling bearing (such as, for instance, a needle bearing) having a sealing function. In addition, while the present embodiment has been described above with reference to the bearing 4 having the sealing function formed in the non-contact seal disposed in the area near the balls 4c on a side closer to the clutch 6, the bearing 4 may have both sides provided with contact seals.

While the present embodiment has been described above with reference to the ring gear permanently engaged with the pinion gear 10 of the starter 9 as one example of the second rotary body 5, an alternative may be structured such that a pulley (crank pulley) is provided in the second rotary body 5 to allow drive torque to be transmitted from the starter 9 to the second rotary body 5 via a belt.

While the specific embodiment of the present invention has been described above in detail, it will be appreciated by those skilled in the art that various modifications and alternatives to those details could be developed in light of the overall teachings of the disclosure. Accordingly, the particular arrangement disclosed are meant to be illustrative only and not limited to the scope of the present invention.

## Claims

1. An engine startup torque transmitting device for transmitting a drive torque, generated by a starter, to an engine crankshaft to start up an engine, comprising:
a first rotary body mounted on the crankshaft;
a second rotary body rotatably supported on the first rotary body via a bearing and drivably connected to the starter at all times; and
a clutch disposed between the first and second rotary bodies to be operative to permit a torque transfer from the second rotary body to the first rotary body during an operation of the starter to rotatably drive the second rotary body while interrupting the torque transfer from the first rotary body to the second rotary body during an operation of the engine to rotatably drive the first rotary body;
wherein the clutch is internally filled with a lubricating grease including a base oil containing a squalene.

2. The engine startup torque transmitting device according to claim 1, wherein:
the base oil further contains polyalphaolefin (PAO).

3. The engine startup torque transmitting device according to claims 1 or 2, wherein:
the grease further includes an additive, composed of a vapor phase corrosion inhibitor, which is blended with the base oil.

4. The engine startup torque transmitting device according to any one of claims 1 to 3, wherein:
the clutch has both sides provided with sealing means for preventing the grease, filled in the clutch, from leaking; and
the bearing includes a rolling bearing having a sealing function and disposed on one side of the clutch as the sealing means.

5. The engine startup torque transmitting device according to claim 4, wherein:
the bearing has one side closer to the clutch to have the sealing function in a non-contact seal.

6. The engine startup torque transmitting device according to any one of claims 1 to 5, wherein:
the squalene is contained in the base oil of the grease in an amount of 10 % by mass or more based on a whole of the base oil including the squalene.

7. The engine startup torque transmitting device according to any one of claims 1 to 6, wherein:
the base oil used in the grease has a friction coefficient of 0.14 or more at -40°C.

8. The engine startup torque transmitting device according to any one of claims 1 to 7, wherein:
the grease further includes silica or urea compound blended in the base oil as a puffing agent.

9. The engine startup torque transmitting device according to any one of claims 1 to 8, wherein:
the grease has a traction coefficient of 0.035 or more at 25°C.

10. The engine startup torque transmitting device according to any one of claims 1 to 9, wherein:
the second rotary body includes a ring gear held in meshing engagement with a pinion gear of the starter.

11. The engine startup torque transmitting device according to any one of claims 1 to 9, wherein:
the second rotary body includes a crank pulley driven with the starter by a belt.

12. The engine startup torque transmitting device according to any one of claims 1 to 11, wherein:
the engine startup torque transmitting device is applied to an engine auto stop/restart system for automatically controlling a stop and restart of the engine.
